# FASCICULE DE BREVET EUROPEEN

(11) **EP 4 072 842 B1**
(45) Date de publication et mention de la délivrance du brevet: **16.08.2023**
(21) Numéro de dépôt: 20829624.4
(22) Date de dépôt: 03.12.2020
(51) Int. Cl.: B29D 30/06

(54) **PROCEDE POUR DETACHER DES PARTICULES D'ELASTOMERE**
VERFAHREN ZUM ABLÖSEN VON ELASTOMERPARTIKELN
METHOD FOR DETACHING ELASTOMER PARTICLES

(30) Priorité: 11.12.2019 FR 1914129
(43) Date de publication de la demande: 19.10.2022
(73) Titulaire: COMPAGNIE GENERALE DES ETABLISSEMENTS MICHELIN, 63040 Clermont-Ferrand (FR)
(72) Inventeur: DETTORRE, Jean-Marie, 63040 CLERMONT-FERRAND CEDEX 9 (FR); DRAGO, Frédéric, 63040 CLERMONT-FERRAND CEDEX 9 (FR); DRUET, Michel, 63040 CLERMONT-FERRAND CEDEX 9 (FR); PIQ, Cyril, 63040 CLERMONT-FERRAND CEDEX 9 (FR); SILVA, Lionel, 63040 CLERMONT-FERRAND CEDEX 9 (FR)
(74) Mandataire: Roussy, Delphine
(86) Numéro de dépôt international: PCT/FR2020/052261
(87) Numéro de publication internationale: WO 2021/116568

(56) Documents cités:
- WO-A1-2019/130055
- IT-A1-201800 000 176
- KR-A- 20180 068 645

## Description

L'invention concerne un procédé pour détacher des particules d'élastomère qui adhèrent sur la surface des microsoupapes disposées sur la surface interne des moules de cuisson de pneumatique.

Dans la demande WO 2016/105306 il est connu un procédé de nettoyage des microsoupapes de moule de cuisson de pneumatique qui consiste à soumettre l'ensemble du moule à des ultrasons avant de les nettoyer à sec puis de les immerger dans un liquide de nettoyage avant rinçage et séchage. Par ailleurs, il nécessite le démontage et l'indisponibilité du moule pendant un temps qui peut être long et incompatible avec les besoins industriels.

Malheureusement un tel procédé est complexe par le nombre important d'étapes et long à réaliser. Il ne permet par ailleurs pas un nettoyage ciblé, et donc potentiellement minutieux des soupapes. Le document de brevet KR 2018 0068645 A divulgue un procédé présentant les caractéristiques du préambule de la revendication indépendante 1.

Aussi il subsiste le besoin de disposer d'un procédé qui permet la détection ciblée des zones intérieures de moules de cuisson de pneumatique, en un nombre limité d'étapes, de manière à effectuer un nettoyage ciblé.

L'invention a donc pour objet un procédé pour détacher des particules d'élastomère qui adhèrent sur des microsoupapes disposées sur la surface interne d'un moule de cuisson de pneumatique de véhicule. Ce procédé se caractérise en ce qu'on détecte la présence d'une microsoupape disposée sur ladite surface interne du moule, et qu'on fasse vibrer ladite microsoupape à une amplitude constante comprise entre environ 0,05 à 0,2mm et une fréquence comprise entre 20.000 et 30.000 Hz pendant le détachement des particules de ladite micro soupape.

Le procédé selon l'invention présente l'avantage d'être de réalisation simple notamment par un faible nombre d'étapes et de permettre un nettoyage précis des éléments constitutifs des microsoupapes.

De préférence, après le détachement définitif des particules, on détecte un changement brutal de fréquence pour arrêter les vibrations.

De préférence, le changement brutal d'amplitude est une augmentation des fréquences jusqu'à environ 6000Hz.

L'invention va être décrite à l'aide des figures suivantes, schématiques et non nécessairement à l'échelle, et dans lesquelles:
- La figure 1 représente une vue schématique d'ensemble du dispositif de nettoyage de l'intérieur d'un moule de cuisson de pneumatique,
- La figure 2 représente une vue schématique du dispositif selon l'invention,
- La figure 3 représente le signal vibratoire émis lors du nettoyage d'une microsoupape,
- La figure 4 représente la variation brutale du signal vibratoire à la fin du nettoyage de la microsoupape, et
- Les figures 5A et 5B représentent une conversion, dans un domaine de fréquences défini, par une transformée de Fourier des différents stades de nettoyage d'une microsoupape.

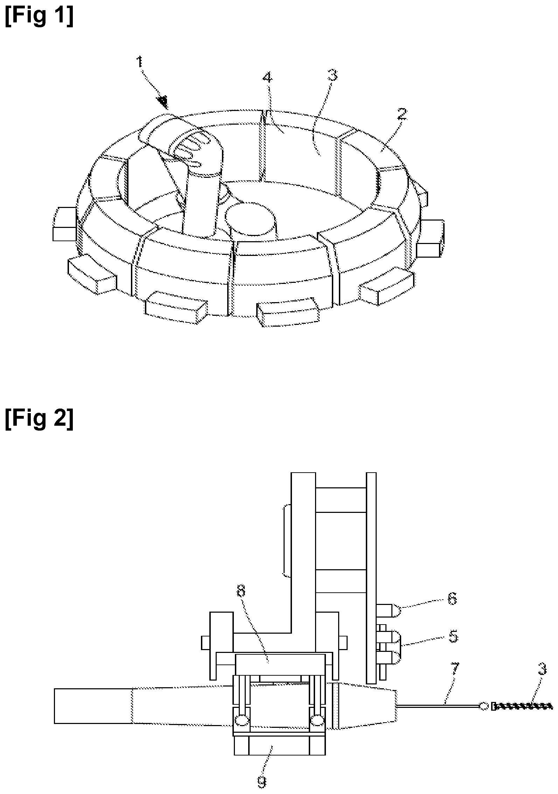

Comme le montre la figure 1, le dispositif de nettoyage, de référence générale 1, est disposé à l'intérieur d'un moule 2 de cuisson de pneumatique. Le moule 2 comprend une multitude de microsoupapes 3 disposées sur toute sa surface interne 4.

Comme le montre de manière plus détaillée la figure 2, le dispositif comprend une caméra 5 destinée à détecter chaque microsoupape 3. La caméra 5 est reliée à un algorithme de type « Hough Circle Transform » par le biais d'un ordinateur (non représenté). Cet algorithme permet d'effectuer un relevé complet de la surface interne 4 du moule 2. La caméra 5 est éclairée de lampe 6, de type LED. Le dispositif comprend en outre un stylo à ultrasons 7, monté sur un rail 8, destiné à approcher progressivement le stylo au contact d'une microsoupape, et un accéléromètre 9 destiné à détecter le changement de fréquence indiquant la fin du nettoyage de la microsoupape. A la place de l'accéléromètre, on peut disposer un microphone qui servira à relever les changements de fréquence des vibrations, par des bruits.

Le dispositif selon l'invention fonctionne de la façon suivante. La caméra 5 détecte une microsoupape 3 à l'aide de la gestion par l'algorithme qui effectue un relevé complet de la surface interne 4 du moule 2. Après avoir repéré une microsoupape 3, le stylo à ultrasons 7, monté sur rail, est approché par incréments jusqu'à ce qu'il touche la surface de la microsoupape 3. Dès son toucher, le stylo commence à vibrer. Les vibrations sont destinées à enlever les particules d'élastomère qui adhèrent sur les microsoupapes 3. L'amplitude des vibrations est d'environ 0.1mm avec une fréquence d'environ 25.000Hz. L'accéléromètre mesure l'amplitude et la fréquence des vibrations.

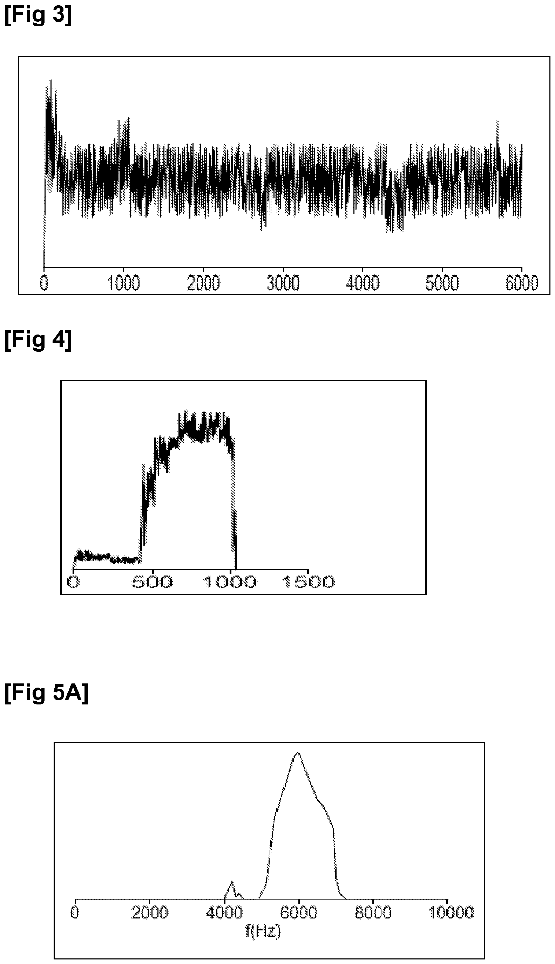

La figure 3 montre le spectre de fréquence obtenu lorsque la pointe du stylo 7 est en contact avec la microsoupape. Comme on peut le voir, l'amplitude des vibrations est faible et quasi constante. Le résultat de la figure 3 est obtenu grâce à l'accéléromètre 9.

Une fois la microsoupape nettoyée, la particule d'élastomère s'en détache ; le spectre des fréquences obtenues est alors celui représenté sur la figure 4. On peut voir une brutale augmentation de la fréquence des vibrations à environ 6.000Hz.

La figure 5A montre la représentation de la transformée de Fourrier des vibrations lorsque la microsoupape est souillée par des particules d'élastomère. Le pic à 6.000Hz montre bien cet état de souillure.

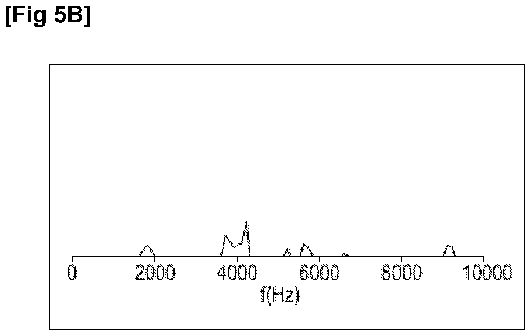

La figure 5B montre la représentation de la transformée de Fourrier des vibrations lorsque les particules d'élastomère n'adhèrent plus à la surface de la microsoupape. Le pic initial à 6.000Hz a disparu. De petits pics de fréquences sont régulièrement répartis sur le spectre.

## Revendications

1. Procédé pour détacher des particules d'élastomère qui adhèrent sur des microsoupapes (3) disposées sur la surface interne d'un moule de cuisson de pneumatique de véhicule, le procédé comprenant :
a. on détecte la présence d'une microsoupape (3) disposée sur ladite surface interne du moule, et **caractérisé en ce que**
b. on fait vibrer ladite microsoupape (3) à une amplitude constante comprise entre environ 0,05 et 0,2mm et une fréquence comprise entre 20.000 et 30.000Hz pendant le détachement des particules de ladite microsoupape.

2. Procédé selon la revendication 1, dans lequel après le détachement définitif des particules, on détecte un changement brutal de fréquence des vibrations pour les arrêter.

3. Procédé selon la revendication 2 dans lequel le changement brutal de fréquence est une augmentation jusqu'à environ 6000Hz.

## Patentansprüche

1. Verfahren zum Ablösen von Elastomerpartikeln, die an Mikroventilen (3) haften, die an der Innenfläche einer Form zum Aushärten von Fahrzeugreifen angeordnet sind, wobei das Verfahren Folgendes aufweist:
a. Entdecken des Vorhandenseins eines Mikroventils (3), das an der Innenfläche der Form angeordnet ist, und **dadurch gekennzeichnet, dass**
b. das Mikroventil (3) mit einer konstanten Amplitude zwischen etwa 0,05 und 0,2 mm und einer Frequenz zwischen 20.000 und 30.000 Hz während des Ablösens der Partikel von dem Mikroventil in Schwingung versetzt wird.

2. Verfahren nach Anspruch 1, wobei nach der endgültigen Ablösung der Partikel eine abrupte Änderung der Frequenz der Schwingungen festgestellt wird, wodurch diese angehalten werden.

3. Verfahren nach Anspruch 2, wobei die abrupte Frequenzänderung eine Erhöhung auf etwa 6000 Hz ist.

## Claims

1. Method for detaching elastomer particles which adhere to microvalves (3) disposed on the inner surface of a vehicle tyre curing mould, **characterized in that**:
a. the presence of a microvalve (3) disposed on said inner surface of the mould is detected, and **characterized in that**
b. said microvalve (3) is made to vibrate with a constant amplitude of between approximately 0.05 and 0.2 mm and a frequency of between 20 000 and 30 000 Hz during the detachment of the particles from said microvalve.

2. Method according to Claim 1, wherein, after the final detachment of the particles, an abrupt change of frequency of the vibrations is detected to stop them.

3. Method according to Claim 2, wherein the abrupt change of frequency is an increase up to approximately 6000 Hz.
